# EUROPÄISCHE PATENTANMELDUNG

(11) **EP 0 933 580 A2**
(43) Veröffentlichungstag der Anmeldung: **04.08.1999**
(21) Anmeldenummer: 98119889.8
(22) Anmeldetag: 21.10.1998
(51) Int. Cl.: F16L 55/105, F16K 3/00, B65G 53/04

(54) **Absperrorgan**

(30) Priorität: 28.01.1998 DE 19802986
(71) Anmelder: Colortronic GmbH, D-61381 Friedrichsdorf (DE)
(72) Erfinder: Rohr, Marcel O., 5502 Hunzenschwil (CH); Müller, Peter, 65830 Kriftel (DE)
(74) Vertreter: Schieferdecker, Lutz, Dipl.-Ing.

(57) **Zusammenfassung**

Die Erfindung betrifft ein Absperrorgan mit einem Gehäuse (2) und mit einer Durchtrittsöffnung (3) für in einer Rohr- oder Schlauchleitung (29) oder dergleichen zu transportierendes Transportgut, wobei mindestens ein Absperrelement (4, 5) vorgesehen und in dem Gehäuse (2) bewegbar ist.

Der Kern der Erfindung besteht darin, daß das Absperrelement (4, 5) derart gestaltet und/oder derart angeordnet und/oder derart bewegbar ist, daß es in der Schließstellung nicht vollständig schließt.

## Beschreibung

Die Erfindung betrifft ein Absperrorgan für Rohr- und Schlauchleitungen und umfaßt ein Gehäuse mit einer Durchtrittsöffnung und mindestens ein in dem Gehäuse vorgesehenes Absperrelement.

Absperrorgane der genannten Art dienen zum Öffnen und Schließen von Rohrleitungen und dergleichen in pneumatischen Förderanlagen, die zum Fördern von Schüttgut bestimmt sind. In großem Umfang werden derartige Absperrorgane in Verbindung mit Kunststoffgranulat verarbeitenden Maschinen eingesetzt und werden zum Füllen von Vorratstrichtern geöffnet bzw. bei Bedarf wieder geschlossen. Das Fördergut ist häufig hinsichtlich Größe und Beschaffenheit nicht absolut homogen, wobei dies insbesondere - jedoch keinwegs ausschließlich - für Recyclingmaterial gilt. Beim Schliessen des Absperrorganes muß der Förderstrom durchtrennt werden, wobei erhebliche Kräfte auftreten können, wenn insbesondere das Fördergut abgequetscht werden muß.

Der Erfindung liegt die Aufgabe zugrunde, ein Absperrorgan zu schaffen, das sich auch bei problematischem Fördergut mit geringem Kraftaufwand schließen läßt.

Zur Lösung dieser Aufgabe sieht die Erfindung mit den Merkmalen des kennzeichnenden Teiles des Anspruches 1 vor, daß das Absperrelement derart gestaltet und/oder derart in dem Gehäuse bewegbar ist, daß es in der Schließstellung die Durchtrittsöffnung nicht vollständig verschließt.

Erfindungsgemäß ist die Durchtrittsöffnung auch in der Schließstellung des Absperrelementes noch geringfügig geöffnet, wodurch sich ein Spalt oder eine Lücke im Bereich der Durchtrittsöffnung befindet. Die Breite dieses Spaltes liegt erfindungsgemäß in der Größenordnung des Fördergutes, so daß dieses unmittelbar selbst den Spalt durch Anlage an seinen Rändern verschließt. Hierbei wird erreicht, daß die zum Schließen des Absperrelementes erforderlichen Kräfte nicht mehr so groß sein müssen, daß sie auch zum Durchtrennen und Abquetschen des Fördergutes ausreichen, wie dies bisher der Fall war.

In Weiterbildung der Erfindung ist ferner vorgesehen, daß mindestens zwei Absperrorgane in Förderrichtung hintereinander und vorzugsweise in vertikaler Anordnung unter- bzw. übereinander angeordnet sind. Hierdurch läßt sich erreichen, daß zunächst der Förderstrom mit dem ersten Absperrorgan unterbrochen wird, während das zweite Absperrorgan einen absolut sicheren Verschluß der Förderleitung gewährleistet. Erreicht wird dies mit Hilfe von relativ kleinen Absperrelementen und mit Hilfe von zu ihrer Verstellung dienenden, ebenfalls kleinen bzw. mit geringem Kraftaufwand arbeitenden Antrieben.

Weitere Merkmale der Erfindung gehen aus Unteransprüchen im Zusammenhang mit der Beschreibung und der Zeichnung hervor.

Die Erfindung wird nachstehend anhand eines Ausführungsbeispieles, das in der Zeichnung dargestellt ist, näher beschrieben. Dabei zeigen:
- Fig. 1:: einen Schnitt durch ein Absperrorgan in der Betriebsstellung "auf";
- Fig. 2:: einen Schnitt wie in Fig. 1 in der Betriebsstellung "zu";
- Fig. 3:: einen Schnitt längs der Linie III-III in Fig. 1;
- Fig. 4:: einen Schnitt längs der Linie IV-IV in Fig. 2;
- Fig. 5:: einen Schnitt längs der Linie V-V in Fig. 1 mit nur einem Absperrelement und nur einem Antrieb;
- Fig. 6:: einen Schnitt längs der Linie VI-VI in Fig. 2 in größerem Maßstab;
- Fig. 7:: einen Schnitt längs der Linie VII-VII in Fig. 2 in größerem Maßstab;
- Fig. 8:: eine schematische Darstellung eines Teiles einer pneumatischen Förderanlage mit zwei Absperrorganen in Seitenansicht und
- Fig. 9:: in schematischer Darstellung eine Draufsicht auf eine Förderanlage mit zwei um 90° zueinander versetzt angeordneten Absperrorganen.

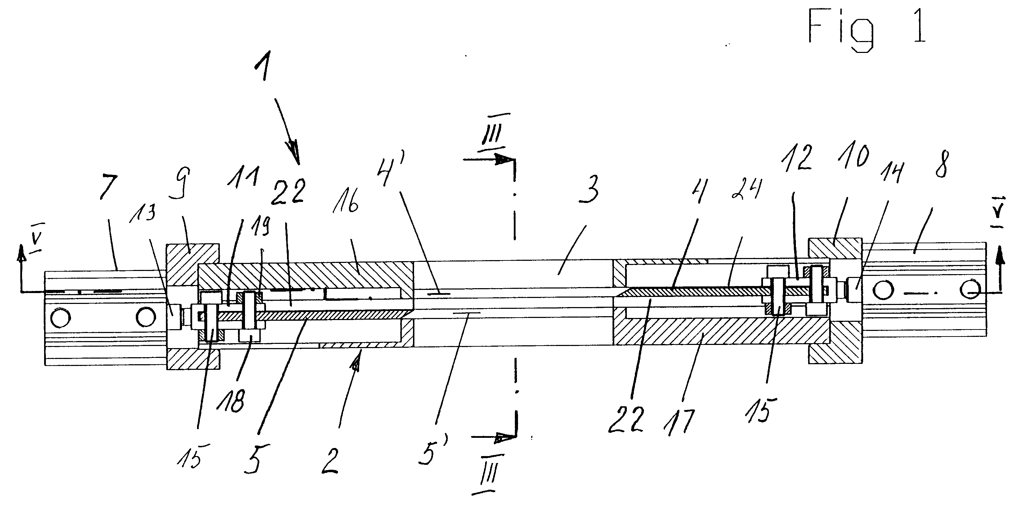

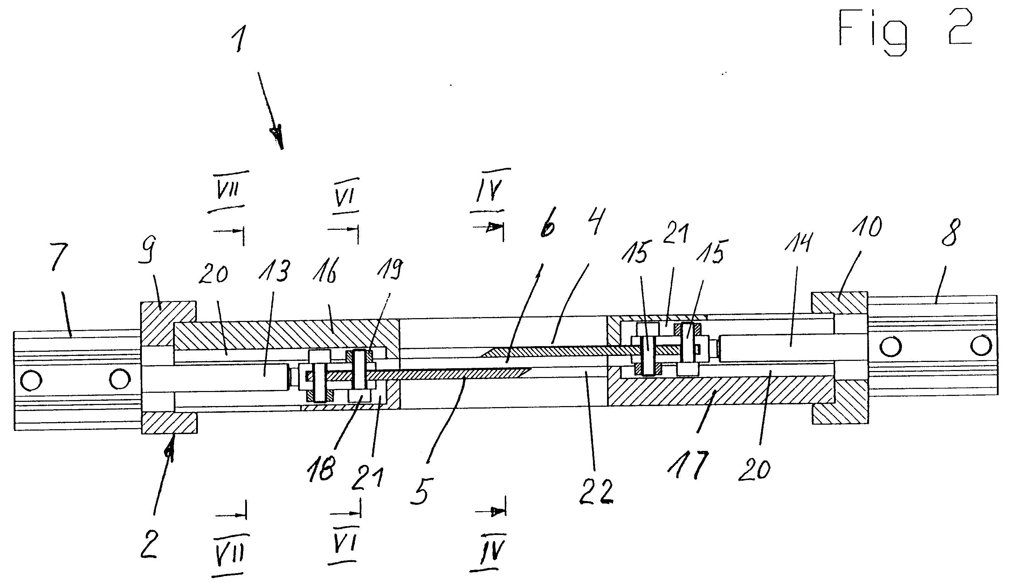

Ein Absperrorgan 1 umfaßt gemäß der Darstellung in den Figuren 1 und 2 ein Gehäuse 2 mit einer Durchtrittsöffnung 3, die sich mit Hilfe zweier, plattenförmiger Absperrelemente 4 und 5 gemäß Fig. 1 vollständig öffnen und gemäß Fig. 2 weitgehend, jedoch nicht luftdicht sowie unter Beibehaltung einer Lücke bzw. eines Spaltes 6 schließen läßt.

Die Absperrelemente 4, 5 sind zur Bildung des Spaltes 6 in parallelen Ebenen 4' und 5' sowie mit Abstand zueinander angeordnet und bewegbar. Im geschlossenen Zustand hintergreifen sie einander, wobei dies über eine mehr oder weniger große Länge der Fall sein kann. Der Spalt 6 erstreckt sich dadurch gemäß Fig. 2 auch in Bewegungsrichtung der Absperrelemente 4, 5.

Die Breite des Spaltes 6 und somit der Abstand der Absperrelemente 4, 5 voneinander entspricht im wesentlichen den Abmessungen des zu fördernden Gutes, das sich bei geschlossenem Absperrorgan 1 vor oder in den Spalt 6 setzt und ihn dadurch verschließt.

Zum Bewegen der Absperrelemente 4, 5 sind jeweils Antriebe 7, 8 vorgesehen und ebenso wie die Absperrelemente 4, 5 um die Breite des Spaltes 6 zueinander versetzt angeordnet. Sie befinden sich an Endstücken 9, 10 des Gehäuses 2 und sind mit Hilfe von Gabelstücke 11, 12 tragenden Kolbenstangen 13, 14 sowie mit Hilfe von Schrauben 15 mit den Absperrelementen 4, 5 verbunden (Fig. 1).

Zur Bildung des Gehäuses 2 dienen ferner plattenförmige Wandteile 16 und 17 zwischen sie an den Gehäuseschmalseiten U-förmig umgreifenden Endstücken 9, 10. Mit ihren Köpfen 18 und mit als Muttern dienenden Gleitsteinen 19 dienen die Schrauben 15 zugleich zur Führung der Absperrelemente 4, 5 in Führungsnuten 20, 21, wie aus den Figuren 1 und 2 bzw. 6 und 7 hervorgeht.

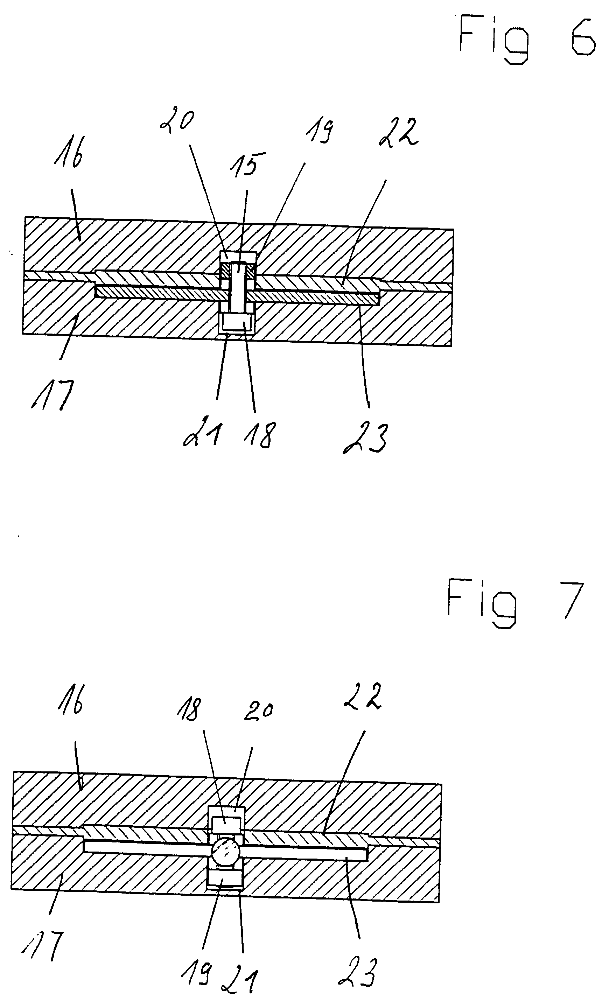

Eine Zwischenwand 22 befindet sich zwischen den beiden Wandteilen 16 und 17, die ferner Ausnehmungen 23 und 24 für die Absperrelemente 4 und 5 (Figuren 6 und 7) aufweisen.

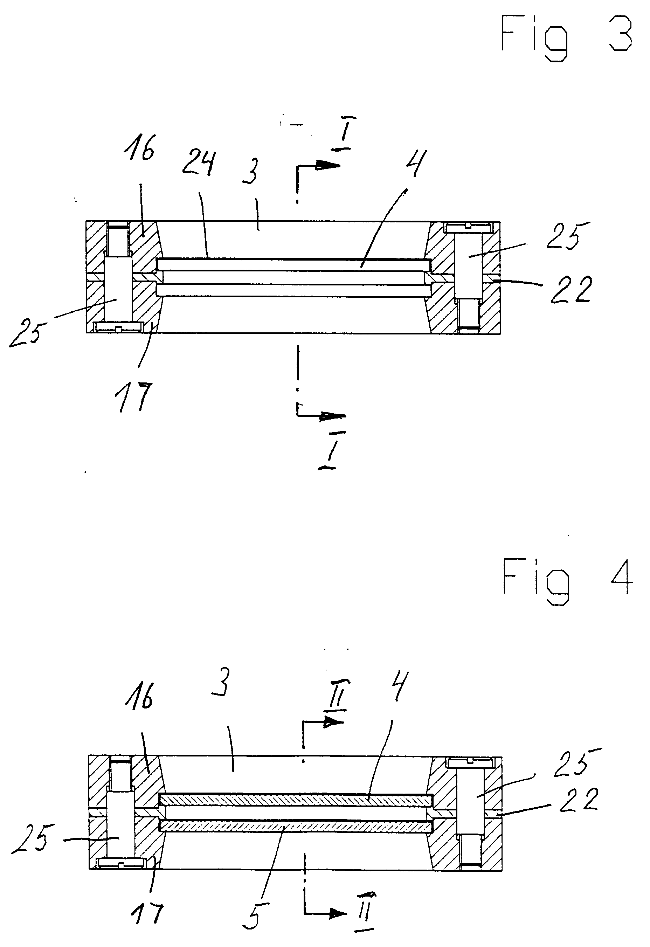

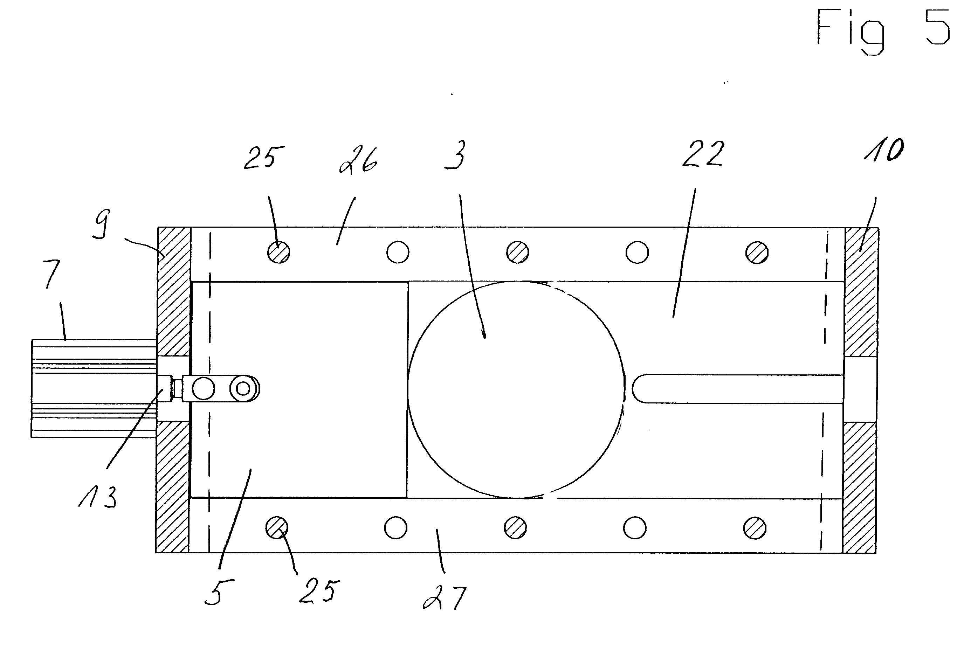

Mit Hilfe von Schrauben 25 (Figuren 3 und 4) sind die Wandteile 16 und 17 sowie die Zwischenwand 22 aneinander befestigt. Die beiden Wandteile 16 und 17 sind zweckmäßigerweise spiegelbildlich gestaltet.

Leisten 26 und 27 können ebenfalls zur Führung der Absperrelemente 4, 5 vorgesehen und dazu auf den Wandteilen 16, 17 angeordnet sein.

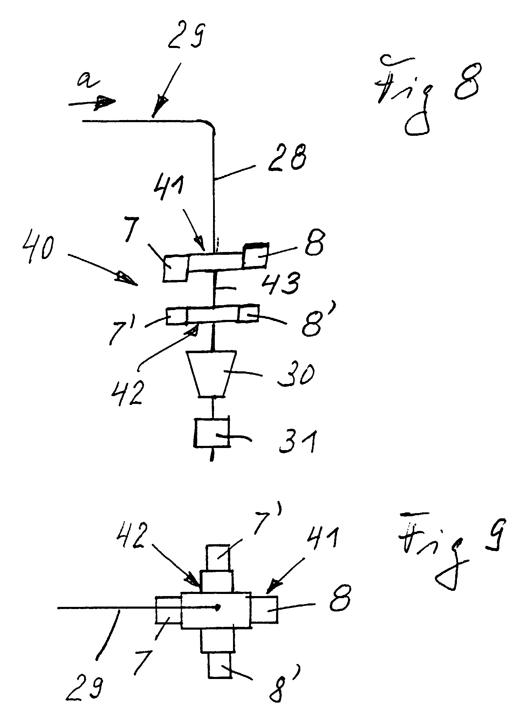

In der Mehrzahl der Fälle wird das Absperrorgan 1 in ein sich vertikal erstreckendes Leitungsstück 28 einer Rohr- oder Schlauchleitung 29 z.B. unmittelbar vor einem Auffangbehälter 30 und/oder einer Wiegevorrichtung 31 angeordnet (Fig. 8). Gemäß dem in Fig. 8 dargestellten Ausführungsbeispiel umfaßt eine in dem Leitungsstück 28 befindliche Absperreinrichtung 40 zwei Absperrorgane 41 und 42. Sie sind in Transportrichtung hintereinander angeordnet, wobei es zweckmäßig ist, wenn der Abstand zwischen den beiden Absperrorganen 41 und 42 so gering wie möglich ist. Vorzugsweise beträgt der Abstand zwischen benachbarten Absperrelementen der beiden Absperrorganen 41 und 42 nur 20mm bis 30 mm.

Um einen möglichst geringen Abstand zwischen den Absperrorganen 41 und 42 zu erreichen, ist es zweckmäßig, wenn diese um 90° zueinander versetzt sind, wie Fig. 9 zeigt.

Die Absperreinrichtung 40 kann aus zwei Absperrorganen 1 gemäß Fig. 1 bestehen. Dies ist aber nicht zwingend notwendig. In der Regel genügt es, wenn das in Transportrichtung (Pfeil a in Fig. 8) erste Absperrorgan 41 in der Schließstellung nicht vollständig schließt, was in Fig. 8 anhand der versetzt zueinander angeordneten Antriebe 7, 8 angedeutet ist, und daß das stromabwärts befindliche Absperrorgan 42 vollständig geschlossen werden kann. Ein Absperrorgan 42 mit vollständig schließbarer Durchtrittsöffnung ist in Fig. 8 aufgrund von symmetrisch angeordneten Antrieben 7' und 8' angedeutet. In einem solchen Fall ist dann ferner auch eine Verfahrensführung zweckmäßig, bei der die Transportstrecke 43 zwischen den beiden Absperrorganen 41 und 42 vollständig geleert wird, ehe das stromabwärts angeordnete Absperrorgan 42 vollständig geschlossen wird.

Die Erfindung ist schließlich nicht auf das in den Figuren konkret dargestellte Ausführungsbeispiel beschränkt. Vielmehr sind auch noch Abwandlungen möglich, ohne von dem grundsätzlichen Erfindungsgedanken abzuweichen. Dazu gehört auch, daß ein Absperrorgan nur ein einziges Absperrelement aufweist oder daß bei Verwendung von zwei Absperrelementen - wie bei dem dargestellten und beschriebenen Ausführungsbeispiel - die beiden Absperrelemente nicht in eine sich überlappende Schließposition bewegbar sind, sondern in einer gemeinsamen Ebene liegen, wobei ihre freien Ränder in der Schließposition mit Abstand einander gegenüberliegen. Dieser Fall wird erreicht, wenn das bzw. die Absperrelemente derart gestaltet sind, daß sie nicht vollständig schließen, wobei dies entweder durch die Größe der Absperrelemente im Verhältnis zur Größe der Durchtrittsöffnung erreicht wird oder dadurch erreicht werden kann, daß die Absperrelemente von ihren Antrieben jeweils nur in eine solche Lage bewegbar sind, in der noch ein Restspalt vorhanden ist. Die Anordnung und/oder Gestaltung und/oder gewählte Bewegbarkeit des bzw. der Absperrelemente führt somit zu der Möglichkeit, daß die Durchtrittsöffnung in der Schließstellung nicht vollständig verschlossen ist.

## Patentansprüche

1. Absperrorgan mit einem Gehäuse (2) und mit einer Durchtrittsöffnung (3) für in einer Rohr- oder Schlauchleitung (29) oder dergleichen zu transportierendes Transportgut, wobei mindestens ein Absperrelement (4, 5) vorgesehen und in dem Gehäuse (2) bewegbar ist, dadurch gekennzeichnet, daß das Absperrelement (4, 5) derart gestaltet und/oder derart angeordnet und/oder derart bewegbar ist, daß es in der Schließstellung nicht vollständig schließt.

2. Absperrorgan nach Anspruch 1, dadurch gekennzeichnet, daß zwei Absperrelemente (4, 5) vorgesehen und derart gestaltet und/oder derart angeordnet und/oder derart bzw. relativ zueinander bewegbar sind, daß sie in der Schließstellung die Durchtrittsöffnung (3) nicht vollständig verschließen.

3. Absperrorgan nach mindestens einem der vorhergehenden Ansprüche, dadurch gekennzeichnet, daß die Absperrelemente (4, 5) in der Schließstellung mit Abstand voneinander angeordnet sind.

4. Absperrorgan nach mindestens einem der vorhergehenden Ansprüche, dadurch gekennzeichnet, daß die Absperrelemente (4, 5) mit Abstand sowie in zueinander parallelen Ebenen (4', 5') angeordnet und bewegbar sind.

5. Absperrorgan nach mindestens einem der vorhergehenden Ansprüche, dadurch gekennzeichnet, daß die Absperrelemente (4, 5) in der Schließstellung einander hintergreifen.

6. Absperrorgan nach mindestens einem der vorhergehenden Ansprüche, dadurch gekennzeichnet, daß die Absperrelemente (4, 5) plattenförmig sind.

7. Absperrorgan nach mindestens einem der vorhergehenden Ansprüche, dadurch gekennzeichnet, daß das Gehäuse (2) aus zwei plattenförmigen Wandteilen (16, 17) und diese an Gehäuseschmalseiten U-förmig umgreifenden Endstücken (9, 10) besteht.

8. Absperrorgan nach mindestens einem der vorhergehenden Ansprüche, dadurch gekennzeichnet, daß sich in der Schließstellung ein Spalt (6) zwischen den Absperrelementen (4, 5) in deren Bewegungsrichtung erstreckt.

9. Absperreinrichtung für in einer Rohr- oder Schlauchleitung oder dergleichen zu förderndes Transportgut, dadurch gekennzeichnet, daß mindestens zwei Absperrorgane (41, 42) vorgesehen und in Transportrichtung hintereinander angeordnet sind.

10. Absperreinrichtung nach Anspruch 8, dadurch gekennzeichnet, daß die Absperrorgane (41, 42) im wesentlichen vertikal über- bzw. untereinander in der Rohr- bzw. Schlauchleitung (29) angeordnet sind.

11. Absperreinrichtung nach mindestens einem der Ansprüche 8 und 9, dadurch gekennzeichnet, daß mindestens das in Transportrichtung zweite Absperrorgan (42) in der Schließstellung vollständig schließt.

12. Absperreinrichtung nach mindestens einem der Ansprüche 8 bis 10, dadurch gekennzeichnet, daß mindestens das in der Transportrichtung erste Absperrorgan (41) in der Schließstellung nicht vollständig schließt.

13. Absperreinrichtung nach mindestens einem der Ansprüche 8 bis 11, dadurch gekennzeichnet, daß der Abstand zwischen den beiden Absperrorganen (41, 42) so gering wie möglich ist.

14. Absperreinrichtung nach mindestens einem der Ansprüche 8 bis 12, dadurch gekennzeichnet, daß der Abstand zwischen Absperrelementen der beiden Absperrorgane (41, 42) in einer Größenordnung von 20mm bis 30mm liegt.

15. Absperreinrichtung nach mindestens einem der Ansprüche 8 bis 13, dadurch gekennzeichnet, daß die Lage der Absperrelemente der beiden Absperrorgane (41, 41) um 90° zueinander versetzt sind.

16. Verfahren zum Fördern von Transportgut in einer Rohr- oder Schlauchleitung (29) mit einer aus mindestens zwei Absperrorganen (41, 42) bestehenden Absperreinrichtung (40), dadurch gekennzeichnet, daß mindestens die Transportstrecke (43) zwischen den beiden bzw. zwischen zwei benachbarten Absperrorganen (41, 42) vollständig geleert wird, ehe das stromabwärts angeordnete Absperrorgan (42) vollständig geschlossen wird.
